# FASCICULE DE BREVET EUROPEEN

(11) **EP 0 426 834 B1**
(45) Date de publication et mention de la délivrance du brevet: **27.07.1994**
(21) Numéro de dépôt: 90908955.9
(22) Date de dépôt: 30.05.1990
(51) Int. Cl.: B22D 41/02, F27D 1/16, C21C 5/44

(54) **PROCEDE POUR REALISER UN REVETEMENT SUR UN RECIPIENT METALLURGIQUE, COMPOSITION ET MACHINE POUR SA MISE EN OEUVRE**
VERFAHREN ZUR HERSTELLUNG EINER BESCHICHTUNG AUF EINEM METALLURGISCHEN GEFÄSS SOWIE ZUSAMMENSETZUNG UND MASCHINE ZU DEREN HERSTELLUNG
METHOD FOR LINING A METALLURGICAL CONTAINER, AND COMPOSITION AND MACHINE FOR IMPLEMENTATION OF SAME

(30) Priorité: 31.05.1989 FR 8907150
(43) Date de publication de la demande: 15.05.1991
(73) Titulaire: DAUSSAN ET COMPAGNIE, F-57140 Woippy (FR)
(72) Inventeur: DAUSSAN, Jean-Charles, F-57000 Metz (FR); DAUSSAN, Gérard, F-57050 Longeville-les-Metz (FR); DAUSSAN, André, F-57050 Longeville-les-Metz (FR)
(74) Mandataire: Keib, Gérard
(86) Numéro de dépôt international: FR9000375
(87) Numéro de publication internationale: WO9014909

(56) Documents cités:
- DE-A- 1 483 584
- DE-A- 1 927 816
- FR-A- 2 220 163
- GB-A- 1 426 135
- US-A- 3 876 354
- US-A- 4 589 633
- Soviet Inventions Illustrated, week 8720, 27 May 1987, section C, class M, abstract No 87-141375/20, Derwent Publications Ltd, (Londres, GB), & SU, A, 1258608 (CASTING MFR. ENG. DES) 23 septembre 1986

## Description

La présente invention concerne un procédé suivant le préambule de la revendication 1 pour réaliser un revêtement sur les faces intérieures d'un récipient métallurgique destiné au transvasement de métal liquide, tel qu'un répartiteur de coulée ou poche de coulée afin de protéger leur paroi ou leur revêtement réfractaire permanent.

L'invention vise également l'emploi d'une composition pour la mise en oeuvre de ce procédé.

L'invention vise en outre la machine pour la mise en oeuvre du procédé précité suivant le préambule de la revendication 9.

Le revêtement de protection ci-dessus est actuellement le plus souvent appliqué sur les faces intérieures d'un récipient métallurgique de transvasement par projection d'une boue aqueuse d'un mélange de matières réfractaires, de fibres et d'un liant.

Ce procédé donne entière satisfaction. Il présente cependant l'inconvénient d'apporter sur les faces intérieures du récipient, un revêtement renfermant beaucoup d'eau qu'il faut ensuite éliminer par un séchage long et coûteux.

On connaît également un procédé consistant à couler la composition du revêtement dans l'espace compris entre les faces intérieures d'un récipient métallurgique et un moule de grande dimension placé dans ce dernier.

Ce moule comporte des moyens de préchauffage et des soupapes permettant l'échappement de l'air pendant l'insufflation de la composition dans l'espace précité.

L'utilisation d'un tel moule est compliquée et onéreuse. De plus, celle-ci entraîne une surconsommation de composition pour réaliser le revêtement, car les parois du moule sont lisses, tandis que celles du revêtement permanent présentent des creux et des bosses surtout lorsqu'il est usé.

On connaît de même, d'après le FR-A- 2 220 163, un procédé pour réaliser un revêtement de four à induction. Un matériau réfractaire sensiblement sec constitué de quartzite et d'un liant thermodurcissable est mis en place entre le revêtement de sécurité du four et une forme fixe, et est compacté par damage ou par vibrage jusqu'à atteindre une densité supérieure à 2, 2 et une porosité de 9 à 10 %. Le compactage est une étape essentielle de ce procédé. Le revêtement est ensuite préchauffé pendant une heure environ à une température comprise entre 100 et 280°C pour lui donner une résistance suffisante, puis on retire la forme et on procède à la cuisson (ou frittage) du revêtement.

Les trois opérations de compactage, de préchauffage pendant au moins une heure, puis de cuisson du revêtement avant l'utilisation font que ce procédé est d'utilisation longue et coûteuse et n'est pas adapté à la réalisation d'un revêtement de récipient de transvasement.

On connaît par ailleurs, d'après le DE - A - 1 927 816, un procédé et un dispositif pour réparer la partie supérieure du revêtement réfractaire de fours industriels tels que des fours PITS.

On déplace le long de la paroi du four un dispositif faisant office de coffrage glissant le long de la face intérieure du revêtement, et on recharge la partie supérieure de ce dernier en projetant une masse à projeter réfractaire aqueuse faisant prise. La masse ainsi projetée prend appui sur le revêtement réfractaire sous-jacent existant. Les particules réfractaires sont projetées avec une certaine vitesse et viennent ainsi s'ancrer dans les particules déjà déposées. Le coffrage glissant avance pendant la projection. La hauteur du nouveau revêtement projeté est faible. Ce revêtement, essentiellement constitué de béton réfractaire projeté pneumatiquement par voie humide, n'est pas destiné à être en contact avec du métal liquide.

Le but de la présente invention est de remédier aux inconvénients des procédés connus.

Suivant l'invention, le procédé pour réaliser un revêtement sur les faces intérieures d'un récipient métallurgique destiné au transvasement de métal liquide comporte le étapes suivantes :
a) on positionne à une certaine distance de la face intérieure dudit récipient au moins une paroi s'étendant sensiblement sur toute la hauteur desdites faces ;
b) on introduit entre la face du récipient et la paroi une composition renfermant au moins une matière pulvérulente réfractaire ;
c) on chauffe cette matière pulvérulente pour obtenir au moins le durcissement de ladite composition.
   Ce procédé est caractérisé en ce qu'il comporte les étapes suivantes :
d) on utilise une paroi mobile s'étendant sensiblement sur toute la hauteur desdites faces ;
e) on introduit entre la face du récipient et la paroi mobile une composition adaptée à durcir sous l'action de la chaleur ;
f) on chauffe cette composition pour agglomérer au moins la surface devant venir au contact de l'acier liquide ;
g) on déplace ladite paroi mobile transversalement le long desdites faces et on répète les étape précitées de façon à obtenir un revêtement continu sur lesdites faces du récipient.

La réalisation d'une telle paroi mobile est beaucoup plus simple et moins onéreuse que celle des moules de grande dimension utilisés jusqu'à maintenant.

De plus, cette paroi mobile peut être déplacée à l'aide de moyens de faible puissance donc économiques en énergie.

Selon une version avantageuse de l'invention, la composition pulvérulente est introduite soit manuellement entre lesdites face et paroi mobile, soit à l'aide d'un dispositif assurant une alimentation constante entre lesdites face et paroi au fur et à mesure de l'avancement de la paroi mobile.

Selon une version préférée de l'invention, on chauffe la matière pulvérulente grâce au préchauffage d'au moins l'une desdites faces ou paroi mobile aux environs de 190°C à 500°C pour les compositions pratiquement sèches puis jusqu'à 900°C si la composition renferme de l'eau de cristallisation ou de réhydratation ou si la décarbonatation de certains réfractaires est nécessaire.

De préférence, on utilise pour la mise en oeuvre de ce procédé une composition renfermant au moins une matière pulvérulente réfractaire et étant capable de durcir et de s'agglomérer sous l'action de la chaleur, cette matière pulvérulente réfractaire étant choisie parmi les matières suivantes : silice, alumine, magnésie, chrome-magnésie, dolomie crue, dolomie cuite, calcite, chaux, oxyde de chrome, silicate de zirconium, silicoalumineux et leur mélange.

La composition peut renfermer en outre un liant choisi parmi les liants minéraux, organiques, hydrauliques et leur mélange.

Selon un autre aspect de l'invention, la machine pour la mise en oeuvre du procédé selon l'invention comprend au moins une paroi mobile le long d'une face intérieure du récipient et formant avec cette face un espace d'épaisseur sensiblement constante, correspondant à celle du revêtement à réaliser, et des moyens pour introduire dans ledit espace la composition pulvérulente du revêtement à former. Cette machine est caractérisée en ce que ladite paroi mobile s'étend sur sensiblement toute la hauteur de la face du récipient.

De préférence, la machine a ses bords latéraux conformés de façon à épouser la forme des faces d'extrémité du récipient.

Ladite paroi mobile comporte de préférence des moyens de chauffage suffisants pour former une croûte dure sur la surface de la composition pulvérulente adjacente à cette paroi mobile, même si le récipient n'est pas luimême chauffant.

Les moyens chauffants associés à la paroi mobile permettent ainsi de chauffer la composition située en regard de cette paroi, jusqu,à la formation d'une croûte superficielle suffisamment durcie ou polymérisée afin d'assurer la cohésion du revêtement, de sorte qu'il est ensuite possible de déplacer la paroi, pour former juste à côté de la portion de revêtement déjà formée une autre portion de revêtement qui prolonge sans discontinuité la précédente.

D'autres particularités et avantages de l'invention apparaîtront encore dans la description ci-après.

Aux dessins annexés, donnés à titre d'exemples non limitatifs :
- la figure 1 est une vue en coupe longitudinale d'un répartiteur de coulée dans lequel est placée une machine d'application d'un revêtement de protection selon l'invention,
- la figure 2 est une vue en coupe à échelle agrandie selon le plan II-II de la figure 1,
- la figure 3 est une vue en plan partielle du répartiteur de coulée, montrant le dessus de la machine.

Comme montré par les dessins annexés, le procédé pour réaliser un revêtement sur les faces latérales intérieures 2 d'un récipient métallurgique 1, destiné à recevoir du métal liquide, comporte les étapes suivantes :
a) on positionne à une certaine distance de la face intérieure 2 dudit récipient une paroi mobile 3,
b) on introduit entre la face 2 du récipient 1 et la paroi mobile 3, une composition 4 renfermant au moins une matière pulvérulente réfractaire, et
c) on chauffe cette matière pulvérulente pour agglomérer au moins la surface devant venir au contact de l'acier liquide,
d) on déplace ladite paroi mobile 3 et on répète les étapes précitées de façon à obtenir un revêtement continu sur lesdites faces du récipient 1.

La composition pulvérulente 4 est introduite soit manuellement entre lesdites face et paroi mobile 3, soit à l'aide d'un dispositif assurant une alimentation constante entre lesdites face et paroi au fur et à mesure de l'avancement de la paroi mobile 3.

On chauffe la matière pulvérulente 4 grâce au préchauffage d'au moins l'une desdites face 2 ou paroi mobile 3 aux environs de 190°C à 500°C pour les compositions pratiquement sèches puis jusqu'à 900°C si la composition renferme de l'eau de cristallisation ou de réhydratation ou si la décarbonatation de certains réfractaires est nécessaire ou encore aux environs de 1 300°C si l'on veut couler dans un récipient chaud.

La matière pulvérulente réfractaire 4 est choisie parmi les matières suivantes : silice, alumine, magnésie, chrome-magnésie, dolomie crue, dolomie cuite, calcite, chaux, oxyde de chrome, silicate de zirconium, silico-alumineux et leur mélange.

De préférence, la composition 4 renferme en outre un liant choisi parmi les liants minéraux, organiques, hydrauliques et leur mélange, la matière pulvérulente réfractaire pouvant être calibrée dans une classe de granulométrie très étendue et être préenrobée à l'aide d'au moins un liant.

La matière pulvérulente peut présenter la composition pondérale suivante :
- matière pulvérulente réfractaire : 60 à 100%
- liant (ciment et/ou silicate et/ou résine : 0 à 20%
- matière carbonée : 0 à 20%.

Par exemple, la composition peut renfermer :
20 à 0,5% de préférence 4% de liant (résine phénolique et/ou silicate et/ou ciment)
20 à 0%, de préférence 1,5% de produits d'allègement, par exemple farine de bois et/ou particules de papier,
99,5 à 60%, de préférence 94,5% de grains réfractaires, par exemple silice.

La composition présente dans cet exemple une densité de 1,10 à 1,40 environ.

La composition peut encore être la suivante :

| | |
|---|---|
| 0 à 20% de liant, de préférence | 4 % |
| 0 à 20% de produits d'allègement, par exemple de farine de bois et/ou particules de papier de préférence | 1 % |
| 0 à 5% de lubrifiant (par exemple stéréate) de préférence | 0,5 % |
| 0 à 5% d'acide borique de préférence | 1 % |
| 100 à 50% de magnésie et/ou silice et/ou alumine et/ou dolomie et/ou chaux et/ou calcite et/ou sulfate et/ou phosphate et/ou zircon de préférence | 93,5 %, |

la composition présentant dans ce cas une densité comprise entre 1,6 et 2,2 environ.

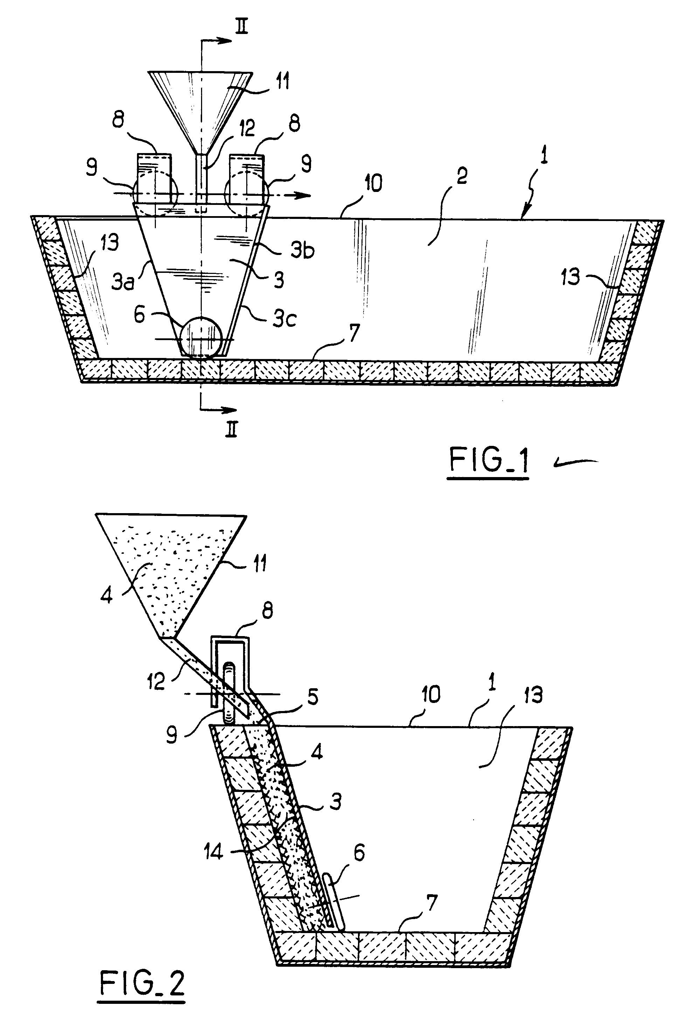

La machine conforme à l'invention comprend au moins une paroi 3 mobile le long d'une face intérieure 2 du récipient 1 et formant avec cette face un espace 5 (voir figure 2) d'épaisseur sensiblement constante, correspondant à celle du revêtement à réaliser et des moyens pour introduire dans ledit espace 5 la composition pulvérulente 4 du revêtement à former.

On voit sur les figures 1 à 3, que la paroi 3 porte à son extrémité inférieure un galet 6 qui prend appui sur le fond 7 du récipient 1 de telle sorte que cette extrémité de la paroi 3 touche pratiquement ce fond 7.

L'extrémité supérieure de la paroi mobile 3 porte deux chapes 8 à l'intérieur desquelles sont montées en rotation des galets 9 prenant appui sur le bord supérieur 10 du récipient.

Au dessus de la paroi mobile 3 se situe une trémie 11 renfermant la matière pulvérulente 4. Cette trémie 11 porte à sa partie inférieure un conduit 12 qui débouche au-dessus de l'espace 5 compris entre la face 2 du récipient et la paroi mobile 3.

Cette trémie 11 peut se déplacer en même temps que la plaque mobile 3 entre les deux faces d'extrémité 13 du récipient 1.

La paroi mobile 3 s'étend sur sensiblement toute la hauteur de la face latérale 2 du récipient 1 et ses bords latéraux 3a, 3b (voir figure 1) sont conformés de façon à épouser la forme des faces d'extrémité 13 du récipient. Ainsi lorsque le bord 3a, 3b vient en contact avec une face d'extrémité 13, ce bord réalise un joint sensiblement étanche avec cette face 13.

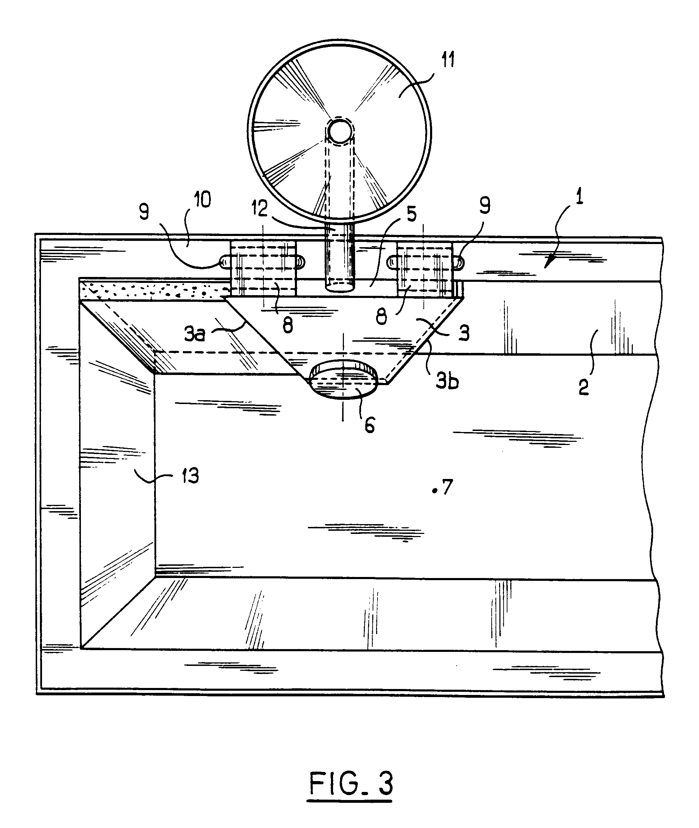

Le bord 3b de la paroi 3 porte un rebord 3c (voir figure 3) qui ferme sensiblement l'espace 5 compris entre la paroi 3 et la face 2, ce qui évite toute fuite de matière pulvérulente par ce bord 3b.

Par ailleurs, la paroi mobile 3 comporte des moyens de chauffage (non représentés) suffisants pour former par liaison chimique (par exemple du silicate) et/ou par liaison hydraulique (par exemple du ciment) et/ou par liaison céramique (par exemple frittage) et/ou par polymérisation (par exemple de la résine) de la matière pulvérulente une croûte dure 14 (voir figure 2) sur la surface de la composition pulvérulente 4 adjacente à cette paroi mobile 3, même si le récipient n'est pas lui-même chauffant, ou préchauffé.

Ces moyens de chauffage peuvent être constitués par des résistances électriques ou par un dispositif chauffé au gaz portés par la paroi mobile 3.

Au récipient 1 peut être adjoint, de préférence de manière non solidaire, un préchauffeur capable de préchauffer uniformément ledit récipient à une température d'au moins 110°C à coeur de manière à solidifier la composition 4 destinée à former le revêtement, même si la paroi mobile 3 n'est pas chauffante.

La paroi mobile 3 est de préférence jumelée avec une paroi déplaçable sur le côté opposé du récipient dans le même sens ou en sens contraire, de façon à pouvoir réaliser un revêtement de protection en même temps sur les deux faces longitudinales 2.

Le déplacement de la paroi mobile 3 (ou des deux parois) peut être commandée au moyen d'un robot.

La machine comporte, en outre et de préférence, un dispositif permettant d'étaler et/ou de tasser la composition 4 devant donner lieu au revêtement se situant sur le fond 7 du récipient.

Le dispositif pour étaler et/ou tasser (par exemple pneumatiquement) la composition 4 sur le fond 7 du récipient 1 comporte des moyens de chauffage permettant de solidifier ladite composition, notamment lorsque le récipient 1 est froid. Cette composition peut également être étalée manuellement sur le fond du récipient.

Il est à noter, en particulier dans la zone se situant au-dessus du bain d'acier, la possibilité d'un risque de friabilité du revêtement du fait de la destruction du liant organique par la chaleur de rayonnement, ce handicap peut être surmonté par la présence d'un liant minéral complémentaire dans l'analyse dudit revêtement (du silicate par exemple). Si l'on veut, notamment pour certaines qualités d'aciers, couler dans un récipient chaud, le risque ci-dessus mentionné se pose pour l'ensemble du revêtement, on doit dans ce cas le préchauffer aux environs de :
1 200°C pour un mélange basique,
1 300/1 350°C pour un mélange siliceux et
1 200°C pour un mélange dolomitique, et/ou à base de chaux et/ou à base de calcite, et/ou à base d'hydroxydes, afin d'obtenir une liaison céramique de l'ensemble (par frittage).

## Revendications

1. Procédé pour réaliser un revêtement de protection sur les faces intérieures (2) d'un récipient métallurgique (1) destiné au transvasement de métal liquide, ce procédé comportant les étapes suivantes :
a) on positionne à une certaine distance de la face intérieure (2) dudit récipient, au moins une paroi (3) s'étendant sensiblement sur toute la hauteur desdites faces,
b) on introduit entre la face (2) du récipient et la paroi (3) une composition (4) renfermant au moins une matière pulvérulente réfractaire,
c) on chauffe cette matière pulvérulente pour obtenir au moins le durcissement de ladite composition,
ce procédé étant caractérisé en ce qu'il comporte les étapes suivantes :
d) on utilise une paroi (3) mobile s'étendant sensiblement sur toute la hauteur desdites faces ;
e) on introduit entre la face (2) du récipient
et la paroi mobile (3) une composition adaptée à durcir sous l'action de la chaleur ;
f) on chauffe cette composition pour agglomérer au moins la surface devant venir au contact de l'acier liquide,
g) on déplace ladite paroi mobile (3) transversalement le long desdites faces et on répète les étapes précitées de façon à obtenir un revêtement continu sur lesdites faces du récipient.

2. Procédé conforme à la revendication 1, caractérisé en ce que la composition pulvérulente (4) est introduite soit manuellement entre lesdites face et paroi mobile (3), soit à l'aide d'un dispositif assurant une alimentation constante entre lesdites face (2) et paroi (3) au fur et à mesure de l'avancement de la paroi mobile (3).

3. Procédé conforme à l'une des revendications 1 ou 2, caractérisé en ce que l'on chauffe la matière pulvérulente (4) grâce au préchauffage d'au moins l'une desdites faces ou paroi mobile (3) aux environs de 190°C à 500°C pour les compositions pratiquement sèches puis jusqu'aux environs de 900°C si la composition renferme de l'eau de cristallisation ou de réhydratation ou si la décarbonatation de certaines matières réfractaires est nécessaire ou encore aux environs de 1 300°C (température de frittage du revêtement) si l'on veut couler dans un récipient chaud.

4. Emploi pour la mise en oeuvre du procédé conforme à l'une des revendications 1 à 3, d'une composition renfermant au moins une matière pulvérulente réfractaire et étant capable de durcir et de s'agglomérer sous l'action de la chaleur, ladite matière pulvérulente réfractaire étant choisie parmi les matières suivantes : silice, alumine, magnésie, chrome-magnésie, dolomie crue, dolomie cuite, calcite, chaux, oxyde de chrome, silicate de zirconium, silico-alumineux et leur mélange .

5. Emploi conforme à la revendication 4, la composition renfermant en outre un liant choisi parmi les liants minéraux, organiques, hydrauliques et leur mélange.

6. Emploi conforme à l'une des revendications 4 ou 5, la composition présentant la composition pondérale suivante :
- matière pulvérulente réfractaire : 60 à 100%
- liant (ciment et/ou silicate et/ou résine) : 0 à 20%
- matière carbonée : 0 à 20%.

7. Emploi conforme à l'une des revendications 4 à 6, la composition renfermant :
20 à 0,5%, de préférence 4%, de liant (par exemple résine phénolique et/ou silicate et/ou ciment)
20 à 0%, de préférence 1,5%, de produits d'allègement, par exemple farine de bois et/ou particules de papier, et/ou fibres minérales et/ou organiques relativement courtes.
99,5 à 60%, de préférence 94,5%, de grains réfractaires, par exemple silice, la composition présentant une densité comprise entre 1,10 et 1,40 environ.

8. Emploi conforme à l'une des revendications 4 à 6, la composition renfermant :
| | |
|---|---|
| 0 à 20% de liant, de préférence | 4 % |
| 0 à 20% de produits d'allègement, par exemple de farine de bois et/ou particules de papier, de préférence | 1 % |
| 0 à 5% de lubrifiant (par exemple stéarate), de préférence | 0,5 % |
| 0 à 5% d'acide borique de préférence | 1 % |
| 100 à 50% de magnésie et/ou silice et/ou alumine et/ou dolomie et/ou chaux et/ou calcite et/ou sulfate et/ou phosphate et/ou zircon, de préférence | 93,5 %, |
la composition présentant dans ce cas une densité comprise entre 1,6 et 2,2 environ.

9. Machine pour la mise en oeuvre du procédé selon l'une des revendications 1 à 3, comprenant au moins une paroi mobile (3) le long d'une face intérieure (2) du récipient (1) et formant avec cette face un espace (5) d'épaisseur sensiblement constante correspondant à celle du revêtement à réaliser, et des moyens pour introduire dans ledit espace (5) la composition pulvérulente du revêtement à former, caractérisée en ce que ladite paroi mobile (3) s'étend sur sensiblement toute la hauteur de la face du récipient (1).

10. Machine conforme à la revendication 9, caractérisée en ce que ses bords (3a, 3b) latéraux sont conformés de façon à épouser la forme des faces d'extrémité (13) du récipient.

11. Machine conforme à l'une des revendications 9 ou 10, caractérisée en ce que ladite paroi mobile (3) comporte des moyens de chauffage suffisants pour former une croûte dure (14) sur la surface de la composition pulvérulente (4) adjacente à cette paroi mobile, même si le récipient (1) n'est pas lui-même chauffant.

12. Machine conforme à l'une des revendications 9 à 11, caractérisée en ce qu'au récipient (1) est adjoint, de préférence de manière non solidaire, un préchauffeur capable de préchauffer uniformément ledit récipient à une température d'au moins 110°C à coeur de manière à solidifier la composition destinée à former le revêtement, même si la paroi mobile n'est pas chauffante et/ou préchauffée.

13. Machine conforme à l'une des revendications 9 à 12, caractérisée en ce que la paroi mobile (3) est jumelée avec une paroi déplaçable sur le côté opposé du récipient dans le même sens ou en sens contraire.

14. Machine conforme à l'une des revendications 9 à 13, caractérisée en ce que le déplacement de la ou des parois mobiles (3) est commandé par un robot.

15. Machine conforme à l'une des revendications 9 à 14, caractérisée en ce qu'elle comporte, en outre et de préférence, un dispositif permettant d'étaler et/ou de tasser la composition devant donner lieu au revêtement se situant sur le fond du récipient.

16. Machine conforme à la revendication 15, caractérisée en ce que le dispositif pour étaler et/ou tasser par exemple pneumatiquement la composition sur le fond (7) du récipient comporte des moyens de chauffage permettant de solidifier ladite composition, notamment lorsque le récipient (1) est froid.

## Claims

1. A process for producing a protective lining on the inner surfaces (2) of a metallurgical vessel (1) intended for the transfer of liquid metal, the process comprising the following steps:
a) at least one wall (3) extending substantially over the entire height of the said surfaces is positioned at a certain distance from the inner surface (2) of the said vessel,
b) a composition (4) containing at least one refractory material in powder form is introduced between the surface (2) of the vessel and the wall (3),
c) said powder material is heated to produce at least hardening of the said composition,
said process being characterised in that it comprises the following steps:
d) a movable wall (3) is used which extends over substantially the entire height of the said surfaces;
e) a composition adapted to harden under the action of heat is introduced between the surface (2) of the vessel and the movable wall (3);
f) said composition is heated to agglomerate at least that surface which is to come into contact with the liquid steel,
g) the said movable wall (3) is moved transversely along the said surfaces and the said steps are repeated to give a continuous lining on the said surfaces of the vessel.

2. A process according to claim 1, characterised in that the powder composition (4) is introduced either manually between said surfaces and the movable wall (3) or by means of a device providing a constant supply between the said surfaces (2) and the wall (3) in proportion as the movable wall (3) advances.

3. A process according to claim 1 or 2, characterised in that the powder material (4) is heated by preheating at least one of the said surfaces or movable wall (3) to temperatures of about 190°C to 500°C for practically dry compositions and then to about 900°C if the composition contains water of crystallisation or rehydration or if decarbonation of certain refractory materials is necessary or alternatively about 1300°C (lining sinter temperature) if the metal is to be poured into a hot vessel.

4. Use for performing the process according to one of claims 1 to 3, of a composition containing at least one refractory material in powder form and being capable of hardening and agglomerating under the action of heat, the said refractory powder material being selected from the following: silica, alumina, magnesia, chrome-magnesia, uncalcined dolomite, calcined dolomite, calcite, lime, chromium oxide, zirconium silicate, silico-alumina materials and their mixture.

5. Use according to claim 4, the composition also containing a binder selected from the mineral, organic or hydraulic binders and their mixture.

6. Use according to claim 4 or 5, the composition having the following composition by weight:
- refractory powder material: 60 to 100%
- binder (cement and/or silicate and/or resin: 0 to 20%
- carbon material: 0 to 20%.

7. Use according to any one of claims 4 to 6, the composition containing:
20 to 0.5%, preferably 4%, of binder (e.g. phenolic resin and/or silicate and/or cement)
20 to 0%, preferably 1.5%, of lightening products, e.g. sawdust and/or paper particles and/or relatively short mineral and/or organic fibres.
99.5 to 60%, preferably 94.5%, of refractory particles, e.g. silica, the composition having a density between 1.10 and 1.40 approximately.

8. Use according to any one of claims 4 to 6, the composition containing:
| | |
|---|---|
| 0 to 20% binder, preferably | 4% |
| 0 to 20% lightening products e.g. sawdust and/or paper particles, preferably | 1% |
| 0 to 5% lubricant (e.g. stearate), preferably | 0.5% |
| 0 to 5% boric acid, preferably | 1% |
| 100 to 50% magnesia and/or silica and/or alumina and/or dolomite and/or lime and/or calcite and/or sulphate and/or phosphate and/or zirconium silicate, preferably | 93.5% |
the composition in this case having a density between 1.6 and 2.2 approximately.

9. A machine for performing the process according to any one of claims 1 to 3, comprising at least one wall (3) movable along an inner surface (2) of the vessel (1) and forming with said surface a space (5) of a substantially constant thickness corresponding to that of the lining to be produced, and means for introducing into the said space (5) the powder composition of the required lining, characterised in that the said movable wall (3) extends over substantially the entire height of the surface of the vessel (1).

10. A machine according to claim 9, characterised in that its side edges (3a, 3b) are so shaped as to follow the shape of the end surfaces (13) of the vessel.

11. A machine according to claim 9 or 10, characterised in that the said movable wall (3) comprises heating means adequate for forming a hard crust (14) on the surface of the powder composition (4) adjacent said movable wall even if the vessel (1) is not itself heated.

12. A machine according to any one of claims 9 to 11, characterised in that a preheater is attached preferably non-permanently to the vessel (1) and is capable of uniformly preheating said vessel to a temperature of at least 110°C throughout so as to solidify the composition intended to form the lining even if the movable wall is not heated and/or preheated.

13. A machine according to any one of claims 9 to 12, characterised in that the movable wall (3) is paired with a wall which is movable on the opposite side of the vessel in the same or in the opposite direction.

14. A machine according to any one of claims 9 to 13, characterised in that the movement of the or each movable wall (3) is controlled by a robot.

15. A machine according to any one of claims 9 to 14, characterised in that it also and preferably comprises a device whereby the composition which is to form the lining and which is situated on the base of the container can be spread and/or rammed.

16. A machine according to claim 15, characterised in that the device whereby the composition on the base (7) of the container can be spread out and/or rammed e.g. pneumatically, comprises heating means for solidifying the said composition, more particularly when the vessel (1) is cold.

## Patentansprüche

1. Verfahren zum Erzeugen eines Schutzüberzugs auf den Innenflächen (2) eines metallurgischen Gefäßes (1), das zum Umfüllen flüssigen Metalls bestimmt ist, wobei das Verfahren folgende Schritte umfaßt:
a) Anordnen zumindest einer sich im wesentlichen über die gesamte Höhe der Flächen erstreckenden Wand (3) unter einem bestimmten Abstand von der Innenfläche (2) des Gefäßes,
b) Einfüllen einer zumindest ein feinpulvriges hitzebeständiges Material umfassenden Zusammensetzung (4) zwischen die Fläche (2) des Gefäßes und die Wand (3),
c) Erhitzen des feinpulvrigen Materials, um zumindest das Aushärten der Zusammensetzung zu erreichen, wobei dieses Verfahren durch die folgenden Schritte gekennzeichnet ist:
d) Verwenden einer beweglichen Wand (3), die sich im wesentlichen über die gesamte Höhe der Flächen erstreckt;
e) Einleiten einer zum Aushärten unter der Einwirkung der Hitze geeigneten Zusammensetzung zwischen die Fläche (2) des Gefäßes und die bewegliche Wand (3);
f) Erhitzen dieser Zusammensetzung zum Agglomerieren zumindest der Oberfläche, die in Kontakt mit dem flüssigen Eisen kommen soll.
g) Verschieben der beweglichen Wand (3) in Querrichtung entlang den Flächen und Wiederholen der vorausgehenden Schritte, um einen zusammenhängenden Schutzüberzug auf den Flächen des Gefäßes zu erhalten.

2. Verfahren nach Anspruch 1, dadurch gekennzeichnet, daß die feinpulvrige Zusammensetzung (4) entweder von Hand oder unter Zuhilfenahme einer Vorrichtung zwischen die Fläche und die bewegliche Wand eingeleitet wird, um eine konstante Einspeisung zwischen der Fläche (2) und der Wand (3) im gleichen Maße zu gewährleisten, wie die bewegliche Wand (3) vorgeschoben wird.

3. Verfahren nach Anspruch 1 oder 2, dadurch gekennzeichnet, daß das feinpulvrige Material (4) aufgrund der Vorerhitzung zumindest einer der Wände oder der beweglichen Wand (3) auf etwa 190°C bis 500°C für praktisch trockene Zusammensetzungen und bis etwa 900°C erhitzt wird, wenn die Zusammensetzung Kristallisations- oder Rehydrationswasser einschließt, oder wenn ein Entziehen von Kohlensäure aus bestimmten hitzebeständigen Materialien erforderlich ist, oder sogar bis auf etwa 1300°C (Sinterungstempertur des Überzugs) wenn das Material in ein kaltes Gefäß gegossen werden soll.

4. Verwendung einer Zusammensetzung zur Durchführung des Verfahrens nach einem der Ansprüche 1 bis 3, wobei die Zusammensetzung zumindest ein feinpulvriges hitzebeständiges Material umfaßt und dazu ausgelegt ist, unter der Einwirkung der Hitze auszuhärten und zu agglomerieren, wobei das feinpulvrige, hitzebeständige Material aus folgenden Materialien ausgewählt ist: Kieselerde Tonerde, Magnesia, Chrommagnesia, unbehandelter Dolomit, gebrannter Dolomit, Calcit, Kalk, Chromoxid, Zirconiumsilicat, Aluminiumsilicat und ihren Gemischen.

5. Verwendung nach Anspruch 4, wobei die Zusammensetzung außerdem ein Bindemittel enthält, das aus den mineralischen, organischen, hydraulischen Bindemitteln und ihren Gemischen ausgewählt ist.

6. Verwendung nach Anspruch 4 oder 5, wobei die Zusammensetzung folgende Gewichtszusammensetzung hat :
- feinpulvriges hitzebeständiges Material: 60 bis 100 %
- Bindemittel (Zement und/oder Silicat und/oder Harz): 0 bis 20 %
- carboniertes Material: 0 bis 20 %.

7. Verwendung nach einem der Ansprüche 4 bis 6, wobei die Zusammensetzung umschließt:
20 bis 0,5 %, vorzugsweise 4 % Bindemittel (beispielsweise Phenolharz und/oder Silicat und/oder Zement), 20 bis 0 %, vorzugsweise 1,5 % Verdünnungsstoffe, beispielsweise Holzmehl und/oder Papierpartikel und/oder relativ kurze Mineralfasern und/oder organische Fasern, 99,5 bis 60 %, vorzugsweise 94,5 % hitzebeständige Körner, beispielsweise Kieselerde,wobei die Zusammensetzung eine Dichte zwischen etwa 1,10 und 1,40 aufweist.

8. Verwendung nach einem der Ansprüche 4 bis 6, wobei die Zusammensetzung umfaßt:
0 bis 20 % Bindemittel, vorzugsweise 4 %,
0 bis 20 % Verdünnungsmittel, beispielsweise Holzmehl und/oder Papierpartikel, vorzugsweise 1 %,
0 bis 5 % Schmiermittel (beispielsweise Stearat), vorzugsweise 0,5 %,
0 bis 5 % Borsäure, vorzugsweise 1 %,
100 bis 50 % Magnesia und/oder Kieselerde und/oder Tonerde und/oder Dolomit und/oder Kalk und/oder Calcit und/oder Sulfat und/oder Phosphat und/oder Zircon, vorzugsweise 93,5 %,
wobei die Zusammensetzung in diesem Fall eine Dichte von etwa 1,6 bis 2,2 hat.

9. Vorrichtung zur Durchführung des Verfahrens nach einem der Ansprüche 1 bis 3, mit zumindest einer beweglichen Wand (3) längs einer Innenfläche (2) des Gefäßes (1), wobei diese Wand mit der Fläche einen Raum (5) einer im wesentlichen konstanten Dicke entsprechend derjenigen des zu erzeugenden Überzugs aufweist, und mit einer Einrichtung zum Einleiten der feinpulvrigen und hitzebeständigen Zusammensetzung des zu erzeugenden Überzugs in den Raum (5), dadurch gekennzeichnet, daß die bewegliche Wand (3) sich im wesentlichen über die gesamte Höhe der Fläche des Gefäßes (1) erstreckt.

10. Vorrichtung nach Anspruch 9, dadurch gekennzeichnet, daß ihre Seitenränder (3a, 3b) an die Form der Endflächen (13) des Gefäßes angepaßt sind.

11. Vorrichtung nach Anspruch 9 oder 10, dadurch gekennzeichnet, daß die bewegliche Wand (3) eine Heizeinrichtung umfaßt, mit der auf der Oberfläche der feinpulvrigen Zusammensetzung (4) eine harte Haut (14) benachbart zu der beweglichen Wand selbst dann ausgebildet werden kann, wenn das Gefäß (1) kein selbstheizendes Gefäß ist.

12. Vorrichtung nach einem der Ansprüche 9 bis 11, dadurch gekennzeichnet, daß an dem Gefäß (1), vorzugsweise lösbar, eine Vorheizeinrichtung angeordnet ist, die dazu geeignet ist, das Gefäß gleichmäßig auf eine Temperatur von zumindest 110°C voraufzuwärmen, um die zur Erzeugung des Überzugs bestimmte Zusammensetzung selbst dann zu verfestigen, wenn die bewegliche Wand nicht selbstheizend und/oder vorbeheizt ist.

13. Vorrichtung nach einem der Ansprüche 9 bis 12, dadurch gekennzeichnet, daß die bewegliche Wand (3) mit einer Wand vereinigt ist, die auf die gegenüberliegende Seite des Gefäßes zu in derselben oder in der entgegengesetzten Richtung verschiebbar ist.

14. Vorrichtung nach einem der Ansprüche 9 bis 13, dadurch gekennzeichnet, daß die Verschiebung der beweglichen Wand oder der beweglichen Wände (3) durch einen Roboter gesteuert wird.

15. Vorrichtung nach einem der Ansprüche 9 bis 14, dadurch gekennzeichnet, daß sie zusätzlich und bevorzugt eine Vorrichtung umfaßt, mit der die Zusammensetzung aufgetragen und/oder aufgehäuft werden kann, die die am Boden des Gefäßes angeordnete Beschichtung bilden soll.

16. Vorrichtung nach Anspruch 15, dadurch gekennzeichnet, daß die Vorrichtung zum beispielsweise pneumatischen Auftragen und/oder Aufhäufen der Zusammensetzung auf dem Boden (7) des Gefäßes eine Heizeinrichtung umfaßt, die ein Aushärten der Zusammensetzung insbesondere dann erlaubt, wenn das Gefäß (1) kalt ist.
